# EUROPEAN PATENT APPLICATION

(11) **EP 4 578 728 A1**
(43) Date of publication of application: **02.07.2025**
(21) Application number: 24220762.9
(22) Date of filing: 17.12.2024
(51) Int. Cl.: B60N 2/28

(54) **CHILD VEHICLE SEAT**

(30) Priority: 29.12.2023 CN 202311872115
(71) Applicant: Maxi Miliaan B.V., 5704 RD Helmond (NL)
(72) Inventor: Huang, Weishi, Guangdong (CN); Guo, Zhenming, Guangdong (CN); Lan, Ruifeng, Guangdong (CN); Huang, Meijun, Guangdong (CN)
(74) Representative: Veldman-Dijkers, Cornelia G. C.

(57) **Abstract**

The present invention belongs to the technical field of a car seat for children, in particular to a child vehicle seat. The child vehicle seat comprises a chassis, a movable disc, a connecting frame and a seat, wherein the connecting frame is slidably connected to the movable disc, and the connecting frame is used for connecting with the seat; a locking structure for limiting the sliding of the connecting frame relative to the movable disc is provided between the chassis and the connecting frame, a rotation locking mechanism for limiting the rotation of the movable disc relative to the chassis is provided between the movable disc and the chassis, and an unlocking mechanism for unlocking the rotation locking mechanism is provided on the seat; when the locking mechanism is unlocked and the movable disc is rotated to a certain angle relative to the chassis, the locking structure will automatically be unlocked. In the present invention, the unlocking mechanism for unlocking the rotation of the seat relative to the base is arranged on the seat, and the sliding of the seat is unlocked through the rotation process of the seat, making the operation simpler and the use more convenient.

## Description

### TECHNICAL FIELD

The present invention relates to the field of child vehicle seats.

### BACKGROUND

A car safety seat for children incorporates a multi-directional adjustment and fastening system, providing sufficient adjustment space for children while ensuring they are securely fastened and cannot break free.

For a car seat, sliding its seat out is an adjustment desired during the rest/non-used state of the car seat, and in most cases, such as when a caregiver needs to place an infant in or take an infant out from the car seat. Due to the car seat being prefixed on a vehicle, there is limited space in the rear of the vehicle, it is challenging for an infant to be placed directly from the front of the car seat. Therefore, the present invention aims for a solution that allows the seat to be rotated towards the side before it being slid, which is particularly useful in a tight rear space, enabling caregivers to rotate the seat towards the vehicle door for easier access. Once the seat is rotated to the side, sliding it outward facilitates easier lifting of the infant from the car seat for the caregiver standing from the outsides of the vehicle.

Generally, for the sake of safety, the seat must be unlocked before it's slid out. The unlocking mechanism in the prior art is commonly located on a base. As the seats increase in size to enhance functionality and comfort, the seats may exceed the dimensions of its bases, potentially obscuring the unlocking button or handle, which could necessitate a cumbersome search for the caregiver, resulting in inconvenience in the use of the car seats.

### SUMMARY

The object of the present invention is to provide a child vehicle seat, with an unlocking mechanism for unlocking the rotation of the seat relative to a base provided on the seat, and the sliding of the seat unlocked through the rotation process of the seat. Therefore, an easier and convenient operation and unlocking is achieved.

This object is accomplished with the child vehicle seat, comprising a chassis, a movable disc, a connecting frame and a seat.

The movable disc is arranged on the chassis and is rotatable relative to the chassis.

The connecting frame is slidably connected to the movable disc, and the connecting frame is used to connect with the seat.

A locking structure for limiting the sliding of the connecting frame relative to the movable disc is provided between the chassis and the connecting frame, a rotation locking mechanism for limiting the rotation of the movable disc relative to the chassis is provided between the movable disc and the chassis, and an unlocking mechanism for unlocking the rotation locking mechanism is provided on the seat.

When the locking mechanism is unlocked and the movable disc is rotated to a certain angle relative to the chassis, the locking structure will automatically be unlocked.

In the child vehicle seat according to an embodiment, the locking structure comprises a locking block arranged on the connecting frame and located between the connecting frame and the chassis; when the locking block is raised, the connecting frame is locked, and when the movable disc is rotated to a certain angle relative to the chassis, the locking block moves downward to unlock the connecting frame.

In the child vehicle seat according to an embodiment, the movable disc is provided with an outer rail, the connecting frame is provided with an inner rail nested in the outer rail and which is slidable relative to the outer rail, and the locking structure further comprises a first linkage clamping pin and a second linkage clamping pin, which are arranged on the connecting frame and oriented towards the inner rail on either side respectively;

The inner rail is provided with a clamping hole, and the outer rail is provided with a locking hole at the corresponding position, and the first linkage clamping pin and the second linkage clam pin are respectively located at two sides of the locking block. When the locking block is raised, it presses against the first linkage clamping pin and the second linkage clamping pin, moving them sideways into the respective clamping hole and locking hole to restrict the sliding of the connecting frame relative to the movable disc.

In the child vehicle seat according to an embodiment, a top surface of the chassis is provided with an unlocking recess, which is located on a circumferential track of the locking block rotating along with the connecting frame, and when the locking block is aligned with the unlocking recess, the locking block moves downwards and falls into the unlocking recess.

In the child vehicle seat according to an embodiment, the opposite end surfaces of the first linkage clamping pin and the second linkage clamping pin are provided with a guide slope, and the first linkage clamping pin is provided with a first spring for pushing the first linkage clamping pin towards the locking block, and the second linkage clamping pin is provided with a second spring for pushing the second linkage clamping pin towards the locking block;

When the locking block is aligned with the unlocking recess, the locking block moves downward under the pressing by the first linkage clamping pin and the second linkage clamping pin.

In the child vehicle seat according to an embodiment, the rotation locking mechanism comprises an insert block arranged on the movable disc, the chassis is provided with a guide table protruding upwards, the outer peripheral surface of the guide table is provided with a locking recess for inserting the insert block, and a spring biasing the insert block against the guide table is provided between the insert block and the movable disc.

In the child vehicle seat according to an embodiment, the movable disc is provided with an annular recess, which is open towards the underside and is sleeved outside the guide table, and the insert block is horizontally arranged on the movable disc and is located outside the annular recess, and the annular recess is provided with a notch for the insert block passing through.

In the child vehicle seat according to an embodiment, the top surface of the movable disc is provided with an observation open, the movable disc is provided with a color display component, the observation open is aligned with the color display component, and when the rotation locking mechanism is unlocked, the color display component can be driven to move accordingly.

In the child vehicle seat according to an embodiment, the color display component comprises a connecting bridge, which is provided with a first color area and a second color area, the first color area and the second color area are located under the observation open; the connecting bridge is connected to the insert block, which can drive the connecting bridge to translate when translating, allowing the first color area or the second color area to be aligned with the observation open.

In the child vehicle seat according to an embodiment, the rotation locking mechanism further comprises a first linkage hinge and a second linkage hinge arranged on the movable disc.

One end of the first linkage hinge is pressed against the insert block, while the other end is connected to a connecting rope, and when the first linkage hinge is rotated around a hinge joint, it can push the insert block to translate in a direction away from the guide table.

### BRIEF DESCRIPTION OF THE DRAWINGS

The child vehicle seat according to the present invention will further be explained with reference to the drawings. Wherein,
FIG. 1 is an exploded view of a child vehicle seat according to an embodiment of the present invention;
FIG. 2 is a schematic view of the child vehicle seat, in which the seat part being in the position after being rotated and slid outward;
FIG. 3 is a schematic structural view of a base of FIG. 2;
FIG. 4 is an exploded view of the base, in which the connecting frame being in the position before being rotated and slid outward;
FIG. 5 is a cross-sectional view of the base along line B-B of FIG. 4, in which the connecting frame being in the position before being rotated and slid outward;
FIG. 6 is a structural diagram of the base;
FIG. 7 is a schematic view of FIG. 6 with the movable disc being rotated by 90 degrees;
FIG. 8 is an exploded view of FIG. 6;
FIG. 9 is a schematic view of the bottom of the movable disc;
FIG. 10 is a cross-sectional view along line A-A of FIG. 6;
FIG. 11 is a schematic view of the bottom of the seat;
FIG. 12 is a schematic view of the bottom of the movable disc in a locked state of the first embodiment;
FIG. 13 is a schematic view of the bottom of the movable disc in an unlocked state of the first embodiment;
FIG. 14 is a schematic view of a top surface of the movable disc;
FIG. 15 is a schematic view of a top surface of the movable disc in an unlocked state;
FIG. 16 is a schematic view of the bottom of the movable disc in a locked state of the second embodiment; and
FIG. 17 is a schematic view of the bottom of the movable disc in an unlocked state of the second embodiment.

### DETAILED DESCRIPTION

In the following, the concept, specific structure and technical effects of the invention will be clearly and completely described with embodiments and drawings, so as to fully explain the purpose, characteristics and effects of the invention. Obviously, the described embodiment is only a part of the embodiments of the present invention. Based on the embodiment of the present invention, other embodiments obtained by those skilled in the art without creative effort are comprised in the scope of protection of the present invention.

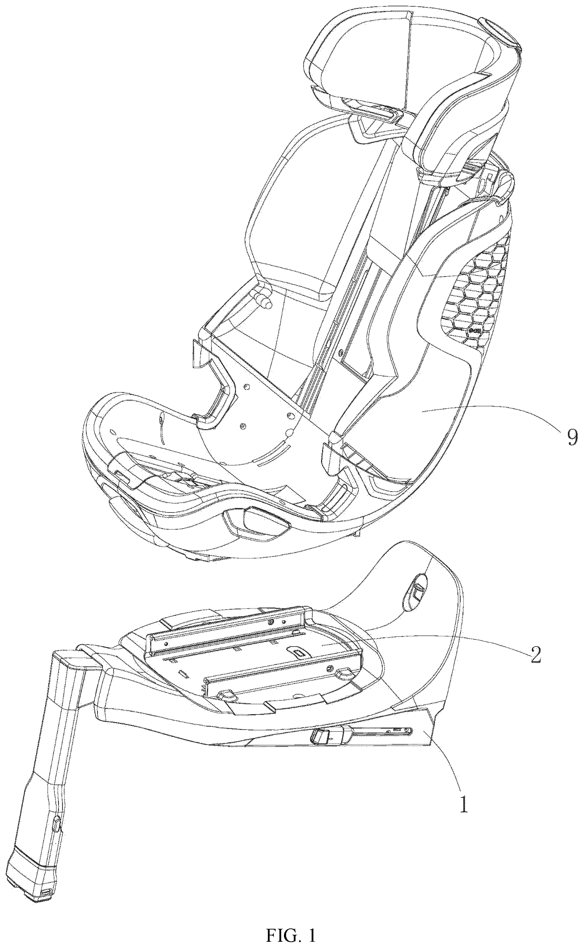

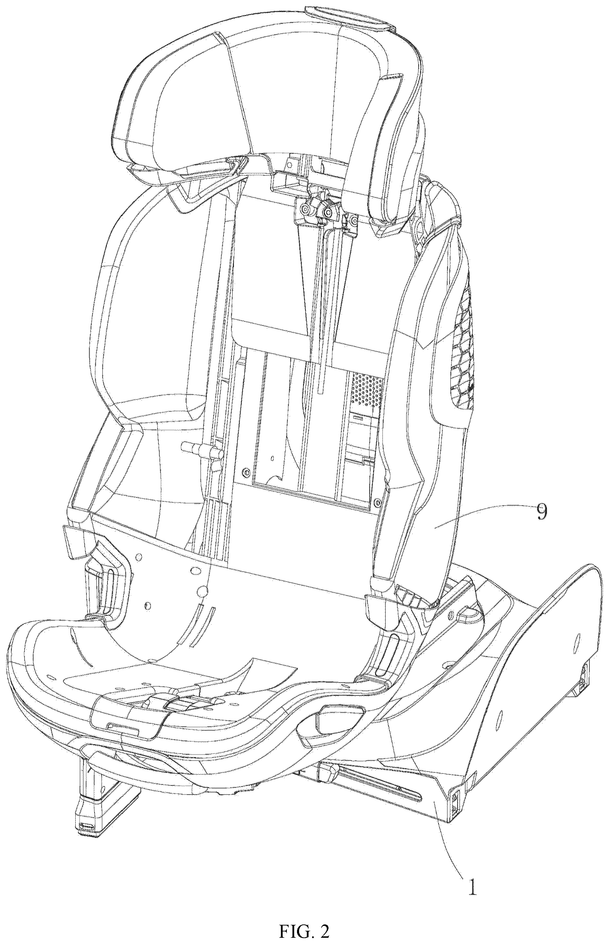

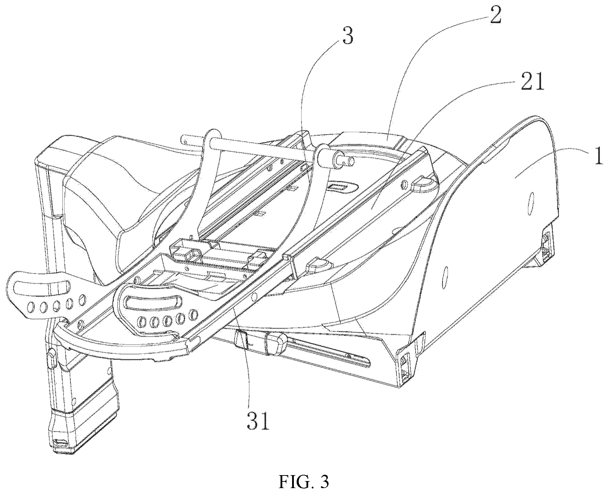

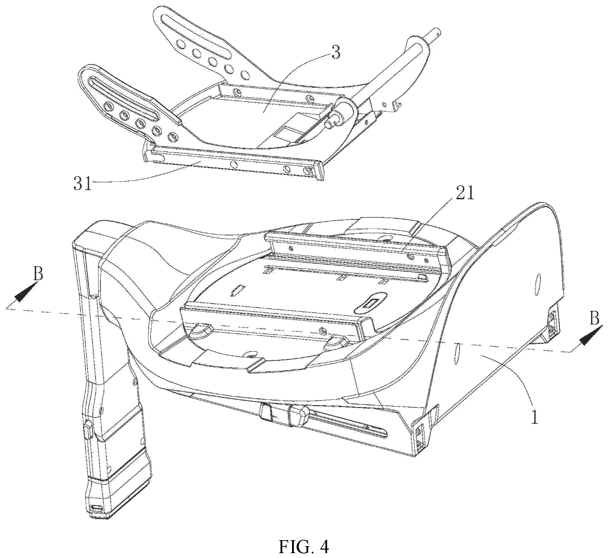

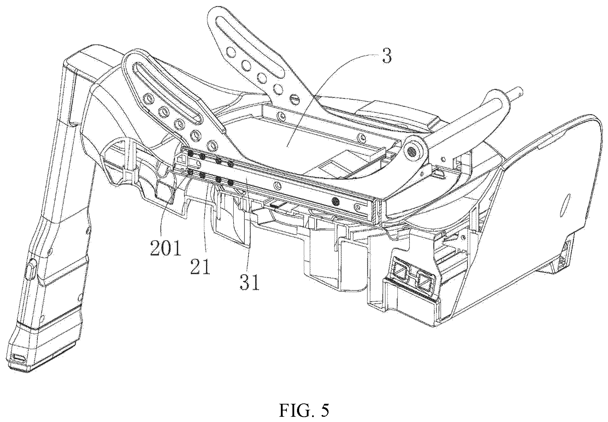

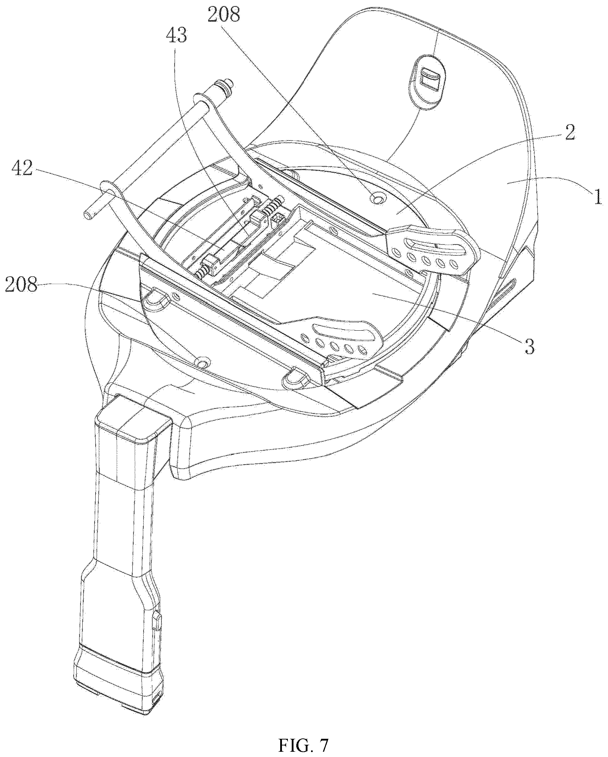

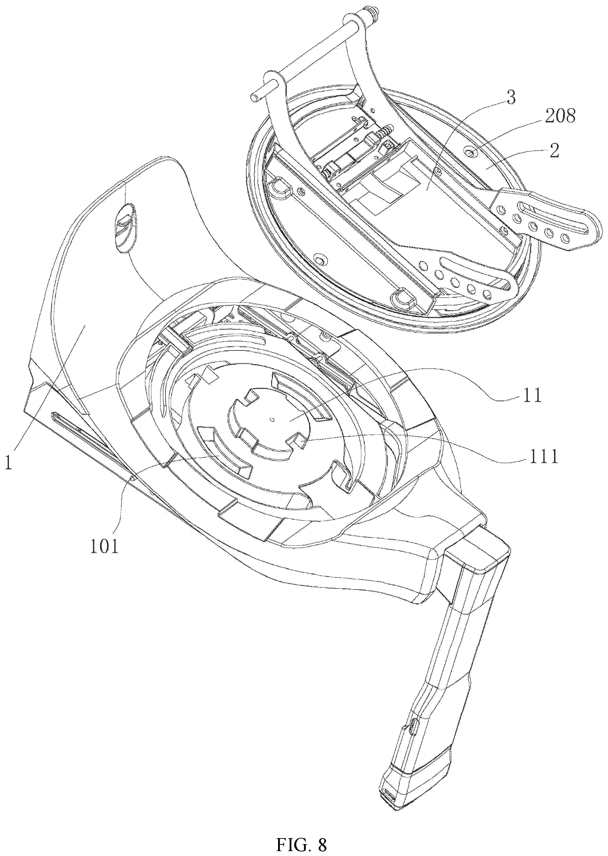

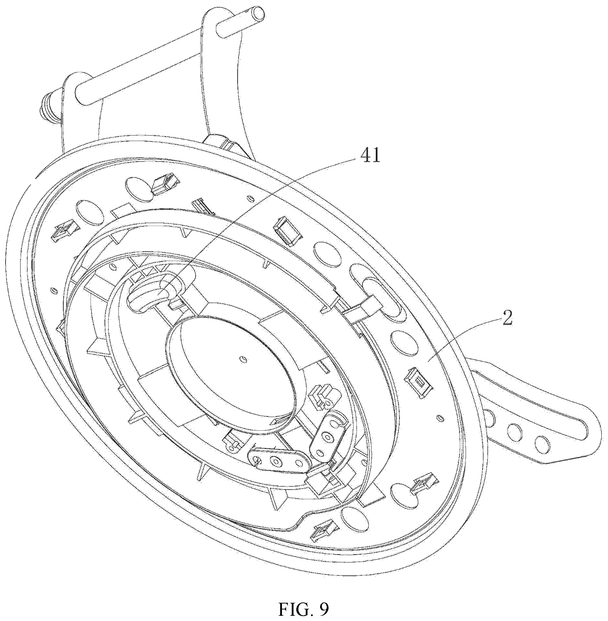

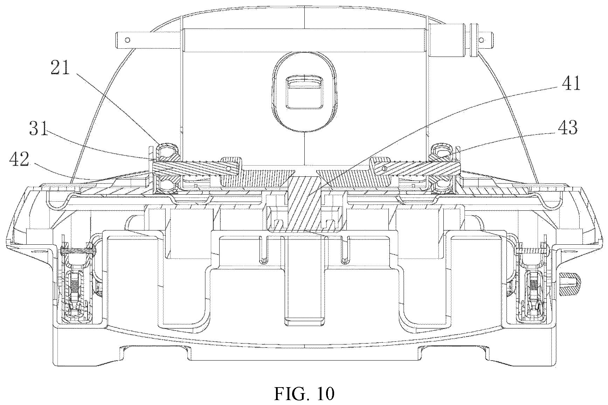

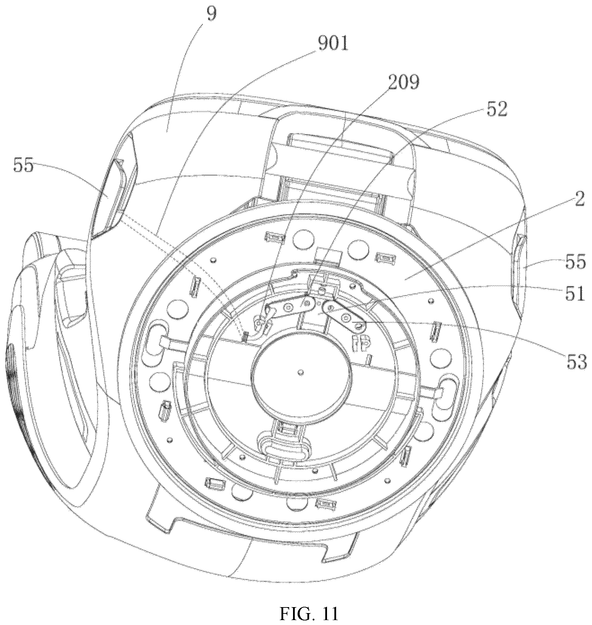

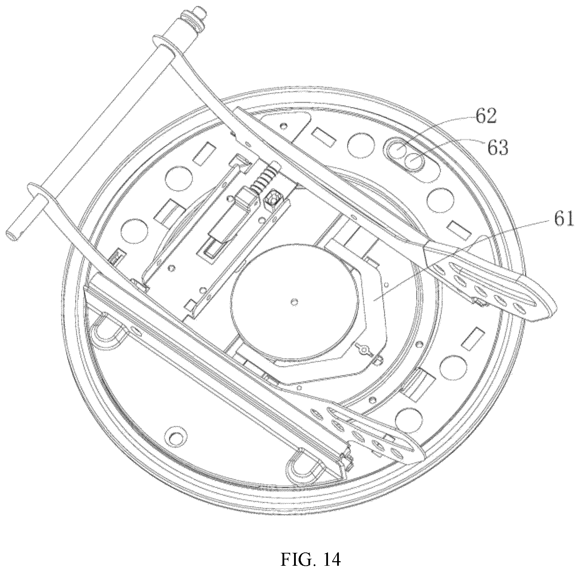

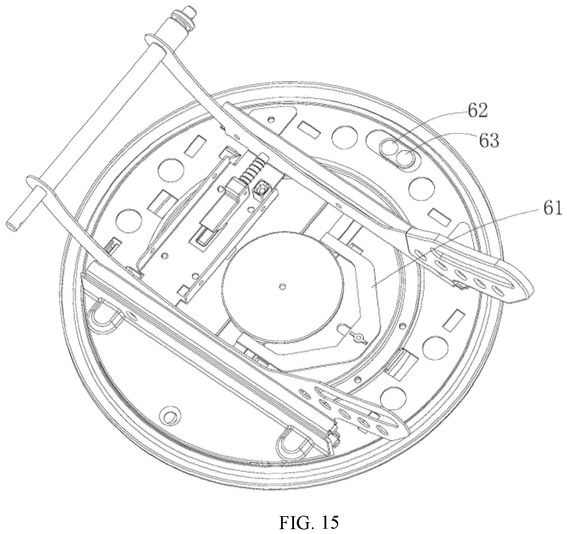

As shown in FIG. 1 to FIG. 15, the embodiment of the invention provides a child vehicle seat, comprising a chassis 1, a movable disc 2, a connecting frame 3 and a seat 9. The movable disc 2 is arranged on the chassis 1 and is rotatable relative to the chassis 1; the connecting frame 3 is slidably connected to the movable disc 2, and the connecting frame 3 is used for connecting with the seat 9. A locking structure for limiting the sliding of the connecting frame 3 relative to the movable disc 2 is arranged between the chassis 1 and the connecting frame 3, a rotation locking mechanism for limiting the rotation of the movable disc 2 relative to the chassis 1 is arranged between the movable disc 2 and the chassis 1, and an unlocking mechanism for unlocking the rotation locking mechanism is arranged on the seat 9. When the locking mechanism is unlocked and the movable disc 2 is rotated to a certain angle relative to the chassis 1, the locking structure will automatically be unlocked. In the child vehicle seat according to various embodiments, the seat is connected to a connecting frame, and thus the seat can translate and slide relative to a chassis through the sliding of the connecting frame relative to the movable disc, while the movable disc itself is rotatable relative to the chassis, thereby achieving the rotation and sliding of the seat. The locking structure restricts the sliding of the connecting frame relative to the movable disc, and is automatically unlocked after the seat is rotated, allowing the seat to slide relative to the movable disc once it is correctly positioned. This makes the operation simpler and the use more convenient. Additionally, an unlocking mechanism for unlocking the rotation of the movable disc has been improved to be mounted on the seat, avoiding the inconvenience of unlocking operations caused by the seat obscuring the unlocking mechanism on the base presented in traditional designs. There is no need to worry about the seat with large size obstructing the unlocking operation. Instead, this scheme makes the operation simpler and more convenient.

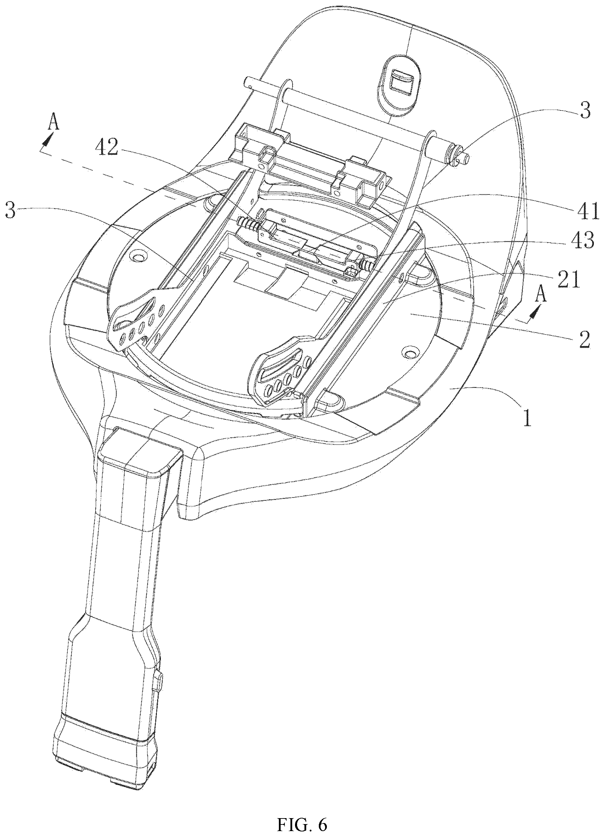

As shown in FIG. 6 to FIG. 10, according to an embodiment of the present invention, the locking structure comprises a locking block 41, which is arranged on the connecting frame 3 and located between the connecting frame 3 and the chassis 1. When the locking block 41 is raised, the connecting frame 3 is locked, and when the movable disc 2 is rotated to a certain angle relative to the chassis 1, the locking block 41 moves down to unlock the connecting frame 3. In this embodiment, the relative locking between the connecting frame 3 and the movable disc is realized by the pressing of the locking block 41.

According to an embodiment of the present invention, the movable disc 2 is provided with an outer rail 21, and the connecting frame 3 is provided with an inner rail 31 nested in the outer rail 21 and slidable relative to the outer rail 21. The locking structure further comprises a first linkage clamping pin 42 and a second linkage clamping pin 43, which are arranged on the connecting frame 3 and oriented towards the inner rail 31 on either side respectively. The inner rail 31 is provided with a clamping hole, and the outer rail 21 is provided with a locking hole at the corresponding position. The first linkage clamping pin 42 and the second linkage clamping pin 43 are located at two sides of the locking block 41 respectively. When the locking block 41 is raised, it presses against the first linkage clamping pin 42 and the second linkage clamping pin 43, moving them sideways into the respective clamping hole and locking hole to restrict the sliding of the connecting frame 3 relative to the movable disc 2. In this embodiment, after the movable disc 2 is rotated to a certain angle relative to the chassis 1, the locking block 41 moves down to unlock the first linkage clamping pin 42 and the second linkage clamping pin 43 on both sides, and the outer rail 21 and the inner rail 31 are in a free state, thereby realizing the automatic unlocking when the movable seat is rotated in place.

According to an embodiment of the present invention, a top surface of the chassis 1 is provided with an unlocking recess 101, which is located on the circumferential track of the locking block 41 rotating along with the connecting frame 3. When the locking block 41 is aligned with the unlocking recess 101, the locking block 41 moves downward and falls into the unlocking recess 101. It can be understood that a lower end of the locking block 41 is constrained by the top surface of the chassis 1, preventing the locking block from moving downward. Only when the locking block 41 is rotated to be aligned with the recess can the locking block 41 move downward. In this embodiment, the unlocking can be realized at any position with this kind of simple structure, that is, the unlocking can be realized by rotating the seat to the required position. Therefore, in this embodiment, the unlocking recess 101 is located at a position where the locking block 41 of the connecting frame 3 is rotated 90 degrees from its initial position. Moreover, there are two oppositely arranged unlocking recesses 101.

According to an embodiment of the present invention, the opposite end surfaces of the first linkage clamping pin 42 and the second linkage clamping pin 43 are provided with a guide slope respectively, and the first linkage clamping pin 42 is biased by a first spring for forcing the first linkage clamping pin 42 towards the locking block 41, and the second linkage clamping pin 43 is biased by a second spring for pushing the second linkage clamping pin 43 towards the locking block 41. When the locking block 41 is aligned with the unlocking recess 101, the locking block 41 moves downward under the pressing of the first linkage clamping pin 42 and the second linkage clamping pin 43. In order to facilitate the resetting of the locking block 41, in the embodiment of the present invention, both sides of the unlocking recess 101 are guide surfaces inclined from the bottom surface of the unlocking recess 101 to the top surface of the chassis 1. When the locking block 41 is rotated along with the movable seat, it exits the unlocking recess 101 and transitions from the lower end of the unlocking recess 101 to the top surface of the base along the slope, gradually moving upwards to push the first linkage clamping pin 42 and the second linkage clamping pin 43 outward to both sides.

In this embodiment, both sides of the seat 9 are provided with an unlocking mechanisms respectively, and each of the unlocking mechanism unlocks the rotation locking mechanism via a connecting rope 901. In this embodiment, each of the connecting rope 901 links independently the unlocking operation on the seat with the locking mechanism on the base. Moreover, two the connecting ropes on either side of the seat, making the unlocking operation is more convenient.

According to an embodiment, the specific structure of the rotation locking mechanism is that: the rotation locking mechanism comprises an insert block 51 arranged on the movable disc 2, the chassis 1 is provided with a guide platform 11 protruding upward, wherein the outer peripheral surface of the guide platform 11 is provided with a locking recess 111 into which the insert block 51 can extend, and a spring biasing the insert block 51 against the guide platform 11 is arranged between the insert block 51 and the movable disc 2.

According to an embodiment of the present invention, the movable disc 2 is provided with an annular recess, which is open towards the underside and is sleeved on outer side of the guide platform 11. The insert block 51 is horizontally arranged on the movable disc 2, which is located outside the annular recess, and the annular recess is provided with a notch for the insert block 51 to pass through. As a matching structure, the guide platform 11 facilitates the rotation of the movable disc 2 relative to the base after the latter being unlocked, and the design simplifies the overall structure by integrating the locking recess 111 directly into the guide platform 11. The rotation locking mechanism further comprises a first linkage hinge 52 and a second linkage hinge 53 arranged on the movable disc 2. One end of the first linkage hinge 52 can be in contact with the insert block 51, and the other end of the first linkage hinge 52 is connected to a connecting rope 901. When the first linkage hinge 52 is rotated around a hinge joint, it can push the insert block 51 to translate in a direction away from the guide platform 11. And the second linkage hinge 53 is also connected to a connecting rope 901, and the other ends of these two connecting ropes 901 are connected with a rotating handle 55 respectively. In this embodiment, the first linkage hinge 52 and second linkage hinge 53 can be operated independently; while pulling one of the connecting ropes 901, the corresponding first linkage hinge 52 or the second linkage hinge 53 is rotated, thereby pushing the insert block 51 to translate to unlock the rotation of movable disc 2. Both first linkage hinge 52 and second linkage hinge 53 only come in contact with insert block 51 while first and second linkage hinge 52, 53 are rotated to unlock the rotation of movable disc 2. The insert block 51 is actually biased by a spring to restore to its rest position to lock the rotation of movable disc 2. During the restoration of the insert block 51, it can be that insert block 51 stays in contact with first /second linkage hinge 52, 53 and pushes the latter two back to their rest position, or it can be first / second linkage hinge 52, 53 are biased by separated springs to restore their rest position, and insert block 51 is not contact with them during the restoration.

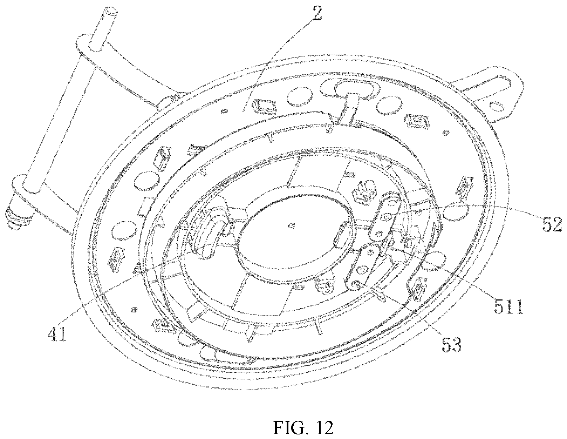

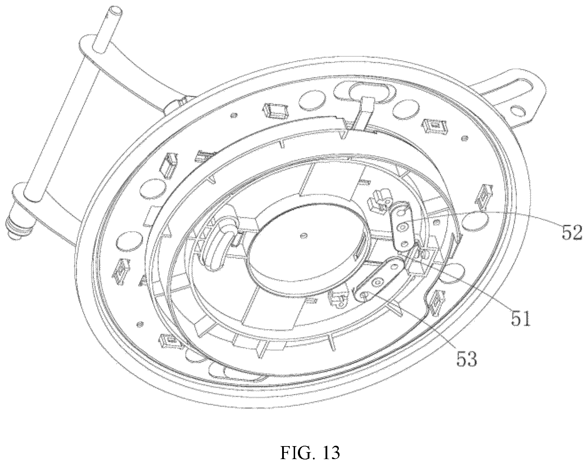

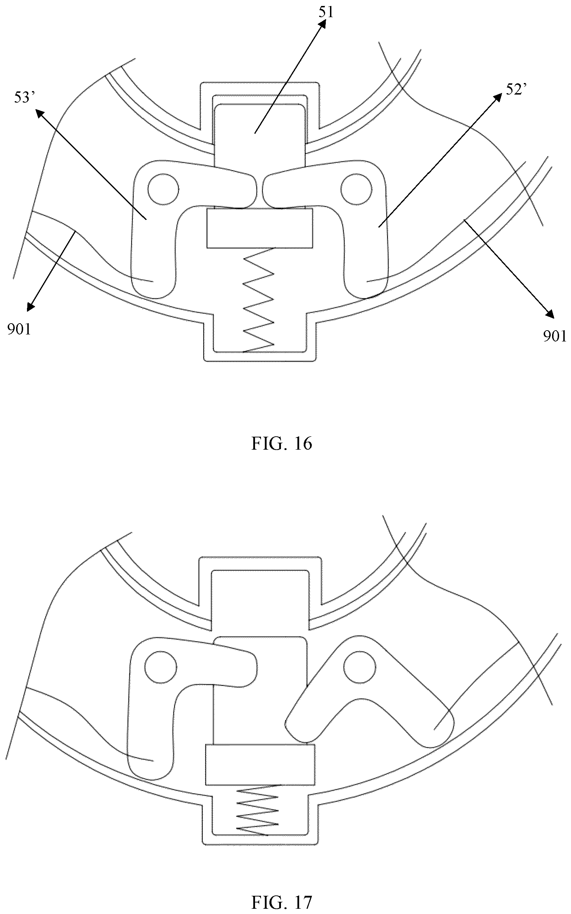

Moreover, in order to cooperate with the first linkage hinge 52 and the second linkage hinge 53, a rear side of the insert block 51 is provided with a flange 511 extending at least downward, against which one ends of the first linkage hinge 52 and the second linkage hinge 53 press to unlock the rotation of movable disc 2. The first and second linkage hinges 52, 53 are configured as straight lever, as shown in Fig. 12 and 13. In another embodiment, the first and second linkage hinges 52, 53 are configured as L-shaped lever, as shown in Fig. 16, 17.

The unlocking mechanism comprises rotating handles 55 arranged on either side of the seat 9, and each rotating handle 55 is connected with a connecting rope 901 at one end of the corresponding connecting rope 901. Moreover, the rotating handles 55 are hinged on either side of the seating part of the seat 9, and when the rotating handle 55 is restored, its outer surface conforms to the radian of the outer contour of the seating part of the seat 9. This structure is simple, easy to operate, and maintains the aesthetic appearance of the seat.

In this embodiment, the bottom of the movable disc 2 comprises a connecting rope mounting part 209 on one side of both the first linkage hinge 52 and the second linkage hinge 53, which facilitates the fixed installation of the connecting ropes 901.

In order to facilitate the locking of the seat after rotated, in the embodiment of the present invention, there are four locking recesses 111, which are uniformly distributed on the outer circumference of the guide platform 11.

Another feature of this embodiment of the invention is that the unlocking state of the seat can be directly observed on the movable disc 2. Specifically, a top surface of the movable disc 2 is provided with an observation open 208, and the movable disc 2 is provided with a color display component. The observation open 208 is aligned with the color display component, and when the rotation locking mechanism is unlocked, it can drive the color display component to move. That is, after pulling the connecting rope to unlock the movable disc 2, the unlocking state can be directly observed through the observation open 208 via the color display component, allowing the user to easily verify the state and prevent mis-operation.

According to an embodiment of the present invention, the color display component comprises a connecting bridge 61, which is provided with a first color area 62 and a second color area 63, wherein the first color area 62 and the second color area 63 are located under the observation open 208, and the connecting bridge 61 is connected to the insert area 51, which can drive the connecting bridge 61 to translate when translating, allowing the first color area or the second color area to be aligned with the observation open. Through the translation of the connecting bridge 61 along with the movement of the insert area 51, the first color area 62 and the second color area 63 are switched to be aligned with the observation open 208, which is convenient for users to directly observe the color areas of different colors to determine whether the seat is unlocked.

According to an embodiment of the present invention, a plurality of rolling elements 201 are also arranged between the upper and lower sides of the inner rail 31 and the outer rail 21. The connecting frame is interactively connected with the outer rail on the movable seat through the inner rail, and the addition of the rolling elements between the inner rail and the outer rail enhances the stability and load-bearing capacity during sliding, making it suitable for use with larger size and heavier weight for a child vehicle seat.

According to the embodiment of the present invention, the length of the outer rail 21 is substantially the same as that of the inner rail 31. In this embodiment, the outer rail 21 is connected to the outer side of the inner rail 31 in a semi-enclosing manner, having the same length as the inner rail 31 helps to improve the overall support effect, making the sliding smoother.

According to an embodiment of the present invention, the upper side and the lower side of the inner rail 31 are both provided with an arc groove. The arc-shaped groove facilitates the embedding and installation for the rolling elements 201, and the outer rail 21 is connected to the outer side of the inner rail 31 in a semi-enclosing manner to limit the movement of the rolling elements 201. In this embodiment, the rolling element 201 is a ball bearing.

In the child vehicle seat according to various embodiments, the seat is connected to a connecting frame, and thus the seat can translate and slide relative to a chassis through the sliding of the connecting frame relative to the movable disc, while the movable disc itself is rotatable relative to the chassis, thereby achieving the turning and sliding of the seat. The present invention restricts the sliding of the connecting frame relative to the movable disc through a locking structure, which is automatically unlocked after the seat is turned, allowing the seat to slide relative to the movable disc once it is correctly positioned. This makes the operation simpler and the use more convenient. Additionally, an unlocking mechanism for unlocking the rotation of the movable disc has been improved to be mounted on the seat itself, avoiding the inconvenience of unlocking operations caused by the seat covering the mechanism on the base presented in traditional designs. There is no need to worry about the seat size obstructing the unlocking operation. Instead, the present invention makes the operation simpler and more convenient.

In the child vehicle seat according to various embodiments the child vehicle seat comprises a chassis 1, a movable disc 2, a connecting frame 3 and a seat 9, wherein the movable disc 2 is arranged on the chassis 1 and is rotatable relative to the chassis 1, wherein the connecting frame 3 is slidably connected to the movable disc 2, and the connecting frame 3 is used to connect with the seat 9, wherein a locking structure for limiting the sliding of the connecting frame 3 relative to the movable disc 2 is provided between the chassis 1 and the connecting frame 3, a rotation locking mechanism for limiting the rotation of the movable disc 2 relative to the chassis 1 is provided between the movable disc 2 and the chassis 1, and an unlocking mechanism for unlocking the rotation locking mechanism is provided on the seat 9, and wherein when the locking mechanism is unlocked and the movable disc 2 is rotated to a certain angle relative to the chassis 1, the locking structure is automatically unlocked.

In the child vehicle seat according to various embodiments the locking structure includes a locking block 41 arranged on the connecting frame 3 and located between the connecting frame 3 and the chassis 1, when the locking block 41 is raised, the connecting frame 3 is locked, and when the movable disc 2 is rotated to a certain angle relative to the chassis 1, the locking block 41 moves downward to unlock the connecting frame 3.

In the child vehicle seat according to various embodiments the movable disc 2 is provided with an outer rail 21, the connecting frame 3 is provided with an inner rail 31 nested in the outer rail 21 and which is slidable relative to the outer rail 21, wherein the locking structure further includes a first linkage clamping pin 42 and a second linkage clamping pin 43 which are arranged on the connecting frame 3 and oriented towards the inner rail 31 on either side respectively, and wherein the inner rail 31 is provided with a clamping hole, and the outer rail 21 is provided with a locking hole at the corresponding position, the first linkage clamping pin 42 and the second linkage clamping pin 43 are respectively located at two sides of the locking block 41, and wherein when the locking block 41 is raised, it presses against the first linkage clamping pin 42 and the second linkage clamping pin 43, moving them sideways into the respective clamping hole and locking hole to restrict the sliding of the connecting frame 3 relative to the movable disc 2.

In the child vehicle seat according to various embodiments a top surface of the chassis 1 is provided with an unlocking recess 101, which is located on a circumferential track of the locking block 41 rotating along with the connecting frame 3, and when the locking block 41 is aligned with the unlocking recess 101, the locking block 41 moves downwards and falls into the unlocking recess 101.

In the child vehicle seat according to various embodiments opposite end surfaces of the first linkage clamping pin 42 and the second linkage clamping pin 43 are provided with a guide slope respectively, and the first linkage clamping pin 42 is biased by a first spring for forcing the first linkage clamping pin 42 towards the locking block 41, and the second linkage clamping pin 43 is biased by a second spring for forcing the second linkage clamping pin 43 towards the locking block 41, and wherein when the locking block 41 is aligned with the unlocking recess 101, the locking block 41 moves downward under the pressing of the first linkage clamping pin 42 and the second linkage clamping pin 43.

In the child vehicle seat according to various embodiments the rotation locking mechanism includes an insert block 51 arranged on the movable disc 2, the chassis 1 is provided with a guide table 11 protruding upwards, the outer peripheral surface of the guide platform 11 is provided with a locking recess 111 for inserting the insert block 51, and a spring biasing the insert block 51 against the guide platform 11 is provided between the insert block 51 and the movable disc 2.

In the child vehicle seat according to various embodiments the movable disc 2 is provided with an annular recess, which is open towards the underside and is sleeved outside the guide platform 11, the insert block 51 is horizontally arranged on the movable disc 2 and is located outside the annular recess, and the annular recess is provided with a notch for the insert block 51 to pass through.

In the child vehicle seat according to various embodiments a top surface of the movable disc 2 is provided with an observation window 208, the movable disc 2 is provided with a color display component, the observation window 208 is aligned with the color display component, and when the rotation locking mechanism is unlocked, the color display component is driven to move accordingly.

In the child vehicle seat according to various embodiments the color display component includes a connecting bridge 61, which is provided with a first color area 62 and a second color area 63, the first color area 62 and the second color area 63 are located under the observation window 208, and wherein the connecting bridge 61 is connected to the insert area 51, which drives the connecting bridge 61 to translate when translating, allowing the first color area 62 or the second color area 63 to be aligned with the observation window 208.

In the child vehicle seat according to various embodiments the rotation locking mechanism further includes a first linkage hinge 52 and a second linkage hinge 53 arranged on the movable disc 2, and wherein one end of the first linkage hinge 52 is pressed against the insert block 51, while the other end is connected to a connecting rope 901, and when the first linkage hinge 52 is rotated around the hinge joint, it pushes the insert block 51 to translate in a direction away from the guide platform 11.

It should be understood that the terms "first" and "second" are used to describe various information in the present invention, which should not be limited to these terms, and these terms are only used to distinguish the same type of information from each other. For example, without departing from the scope of the present invention, "first" information can also be called "second" information, and similarly, "second" information can also be called "first" information. In addition, the terms "center", "upper", "lower", "left", "right", "vertical", "horizontal", "inner" and "outer" indicate the orientation or positional relationship based on the orientation or positional relationship shown in the attached drawings, which is only for the convenience of describing the invention and simplifying the description, and does not indicate or imply that the devices or elements referred to must have a specific orientation.

The above is a detailed description of the preferred implementation of the present invention, but the invention is not limited to the embodiment, and those skilled in the art can make various equivalent deformations or substitutions without violating the spirit of the present invention, which are comprised in the scope defined by the claims of this invention.

### List of references

- 1: chassis
- 2: movable disc
- 3: connecting frame
- 9: seat
- 11: guide platform
- 21: outer rail
- 31: inner rail
- 41: locking block
- 42: first linkage clamping pin
- 43: second linkage clamping pin
- 51: insert block
- 52: first linkage hinge
- 53: second linkage hinge
- 55: rotating handle
- 61: connecting bridge
- 62: first color area
- 63: second color area
- 101: unlocking recess
- 111: locking recess
- 901: connecting rope
- 201: rolling element
- 208: observation window
- 209: connecting rope mounting part
- 511: flange

## Claims

1. A child vehicle seat, comprising a chassis (1), a movable disc (2), a connecting frame (3) and a seat (9),
wherein the movable disc (2) is arranged on the chassis (1) and is rotatable relative to the chassis (1);
wherein the connecting frame (3) is slidably connected to the movable disc (2), and the connecting frame (3) is used to connect with the seat (9);
wherein a locking structure for limiting the sliding of the connecting frame (3) relative to the movable disc (2) is provided between the chassis (1) and the connecting frame (3), a rotation locking mechanism for limiting the rotation of the movable disc (2) relative to the chassis (1) is provided between the movable disc (2) and the chassis (1); and
wherein the locking structure comprises at least one locking element (42, 43), and when the locking mechanism is unlocked and the movable disc (2) is rotated to a certain angle relative to the chassis (1), the locking element is moved laterally and thus the connecting frame (3) can be slidable relative to the movable disc (2).

2. The child vehicle seat according to claim 1, wherein the locking structure further comprises a locking block (41) arranged on the connecting frame (3) and located between the connecting frame (3) and the chassis (1), when the locking block (41) is raised, it maintains the at least one locking element in the position of locking the connecting frame (3) and movable disc (2), and when the movable disc (2) is rotated to a certain angle relative to the chassis (1), the locking block (41) moves downward automatically to drive the at least one locking element (42, 43) laterally to unlock the connecting frame (3) from the movable disc (2) .

3. The child vehicle seat according to claim 2, wherein the locking block (41) and / or the at least one locking element (42, 43) is provided with a guide slope respectively, and the at least locking element (42, 43) is biased by a first spring towards the locking block (41);
when the locking block (41) is raised, the locking block (41) abuts the at least one locking element (42, 43) in the position of locking the connecting frame (3) and movable disc (2); when the locking block (41) moves downward, the at least one locking element (42, 43) is moved laterally under the spring.

4. The child vehicle seat according to claim 2, wherein the at least locking element (42, 43) is connected to the locking block (41) via a wire, when the locking block (41) moves downward, it drags the locking element (42, 43) laterally to unlock the connecting frame (3) from the movable disc (2).

5. The child vehicle seat according to any of the claims 2 to 4, wherein an top surface of the chassis (1) is provided with an unlocking recess (101), which is located on a circumferential track of the locking block (41) rotating along with the connecting frame (3), and when the locking block (41) is aligned with the unlocking recess (101), the locking block (41) moves downwards and falls into the unlocking recess (101).

6. The child vehicle seat according to any of the claims 3 to 5, wherein the movable disc (2) is provided with an outer rail (21), the connecting frame (3) is provided with an inner rail (31) nested in the outer rail (21) and which is slidable relative to the outer rail (21); wherein the locking structure comprises two locking elements-a first linkage clamping pin (42) and a second linkage clamping pin (43) which are arranged on the connecting frame (3) and oriented towards the inner rail (31) on either side respectively; and
wherein the inner rail (31) is provided with a clamping hole, and the outer rail (21) is provided with a locking hole at the corresponding position, the first linkage clamping pin (42) and the second linkage clamping pin (43) are respectively located at two sides of the locking block (41), and wherein when the locking block (41) is raised, it presses against the first linkage clamping pin (42) and the second linkage clamping pin (43), moving them sideways into the respective clamping hole and locking hole to restrict the sliding of the connecting frame (3) relative to the movable disc (2).

7. The child vehicle seat according to claim 1, wherein the rotation locking mechanism comprises an insert block (51) arranged on the movable disc (2) or the chassis (1), the insert block (51) is biased by a spring to lock the movable disc (2) and the chassis (1).

8. The child vehicle seat according to claim 7, wherein the rotation locking mechanism includes an insert block (51) arranged on the movable disc (2), the chassis (1) is provided with a guide table (11) protruding upwards, the outer peripheral surface of the guide platform (11) is provided with at least one locking recess (111) for inserting the insert block (51), and a spring biasing the insert block (51) against the guide platform (11) is provided between the insert block (51) and the movable disc (2).

9. The child vehicle seat according to claim 8, wherein the movable disc (2) is provided with an annular recess, which is open towards the underside and is sleeved outside the guide platform (11), the insert block (51) is horizontally arranged on the movable disc (2) and is located outside the annular recess, and the annular recess is provided with a notch for the insert block (51) to pass through.

10. The child vehicle seat according to any of the claims 7 to 9, wherein the rotation locking mechanism further comprises at least one linkage hinge (52, 53) being rotatably arranged on the movable disc (2); and one end of the at least one linkage hinge (52, 53) is connected to the rotating handle (55) provided on the seat (2) or on the chassis (1); when the at least one linkage hinge (52, 53) is rotated, the other end of the at least one linkage hinge (52, 53) pushes the insert block (51) to translate in a direction away from the guide platform (11).

11. The child vehicle seat according to claim 10, wherein, while the at least one linkage hinge (52, 53) is connected to the rotating handle (55) vias a connecting rope (901).

12. The child vehicle seat according to claim 10, wherein the at least one linkage hinge (52, 53) is configured as a straight lever or a L-shaped lever.

13. The child vehicle seat according to any of the preceding claims, wherein an top surface of the movable disc (2) is provided with an observation open (208), the movable disc (2) is provided with a color display component, the observation open (208) is aligned with the color display component, and when the rotation locking mechanism is unlocked, the color display component is driven to move accordingly.

14. The child vehicle seat according to claim 10, wherein the color display component comprises a connecting bridge (61), which is provided with a first color area (62) and a second color area (63), the first color area (62) and the second color area (63) are located under the observation open (208), and wherein the connecting bridge (61) is connected to the insert area (51), which drives the connecting bridge (61) to translate when translating, allowing the first color area (62) or the second color area (63) to be aligned with the observation open (208).
